# EUROPEAN PATENT APPLICATION

(11) **EP 4 618 649 A1**
(43) Date of publication of application: **17.09.2025**
(21) Application number: 22964675.7
(22) Date of filing: 07.11.2022
(51) Int. Cl.: H04W 72/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Grassi, Stefano
(86) International application number: PCT/CN2022/130316
(87) International publication number: WO 2024/098196

(57) **Abstract**

Embodiments of the present application provide a wireless communication method, a terminal device, and a network device. The network device may indicate whether the network device supports a WUS area or not and indicate activation or deactivation of a WUS-based power saving mode. That is, the network device may flexibly control the WUS-based energy saving mode, so as to ensure the WUR performance in a dual coverage scenario, thereby improving the WUR-based terminal energy saving effect. The wireless communication method comprises: a terminal device receives at least one piece of information, wherein the at least one piece of information is used for indicating at least one of the following: whether a network device supports a WUS area, and activation or deactivation of a WUS-based energy saving mode. In addition, the present application provides a method for internal and external synchronization and measurement of a WUS area on the premise of WUS area division.

## Description

### TECHNICAL FIELD

Embodiments of the present disclosure relate to the field of communication, and more particular, to a wireless communication method, a terminal device, and a network device.

### BACKGROUND

In a New Radio (NR) system, receiving a wake up signal (WUS) through a wake up receiver (WUR) is introduced, which has the characteristics of extremely low cost, extremely low complexity and extremely low power consumption, and the coverage of the WUS corresponding to the WUR may be different from the coverage of the radio signal corresponding to the main radio, that is, there is a Dual Coverage scenario. In the Dual Coverage scenario, higher requirements are put forward for WUR based terminal power saving. How to ensure the performance of the WUR is a problem that needs to be solved.

### SUMMARY

Embodiments of the present disclosure provide a wireless communication method, a terminal device, and a network device. The network device may indicate whether the network device supports a WUS Zone (WZ), and indicate activation or deactivation of a WUS based power saving (WBPS) mode, that is, the network device may flexibly control the WBPS mode, thereby ensuring the performance of the WUR in the Dual Coverage scenario and improving the WUR based terminal power saving effect.

In the first aspect, a wireless communication method is provided. The method includes the following operation.

A terminal device receives at least one piece of information.

The at least one piece of information is used to indicate at least one of: whether a network device supports a WZ, or activation or deactivation of a WBPS mode.

In the second aspect, a wireless communication method is provided. The method includes the following operation.

A network device transmits at least one piece of information.

The at least one piece of information is used to indicate at least one of: whether the network device supports a WZ, and activation or deactivation of a WBPS mode.

In the third aspect, a terminal device is provided. The terminal device is configured to perform the method in the first aspect.

Specifically, the terminal device includes a function module configured to perform the method in the first aspect described above.

In the fourth aspect, a network device is provided. The network device is configured to perform the method in the second aspect described above.

Specifically, the network device includes a function module configured to perform the method in the second aspect described above.

In the fifth aspect, a terminal device is provided. The terminal device includes a processor and a memory. The memory is configured to store a computer program, and the processor is configured to invoke and execute the computer program stored in the memory to cause the terminal device to perform the method in the first aspect described above.

In the sixth aspect, a network device is provided. The network device includes a processor and a memory. The memory is configured to store a computer program, and the processor is configured to invoke and execute the computer program stored in the memory to cause the network device to perform the method in the second aspect described above.

In the seventh aspect, an apparatus is provided. The apparatus is configured to implement the method in any one of the first to second aspects described above.

Specifically, the apparatus includes a processor. The processor is configured to invoke and execute a computer program from a memory to cause a device on which the apparatus is mounted to perform a method in any one of the first to second aspects described above.

In the eighth aspect, a computer readable storage medium is provided. The computer readable storage medium is configured to store a computer program. The computer program causes a computer to perform the method in any of the first to second aspects described above.

In the ninth aspect, a computer program product is provided. The computer program product includes computer program instructions. The computer program instructions cause a computer to perform the method in any of the first to second aspects described above.

In the tenth aspect, a computer program is provided. When the computer program is executed on a computer, the computer performs the method in any one of the first to second aspects described above.

According to the above technical solution, the network device can indicate whether the network device supports the WZ, and indicate activation or deactivation of the WBPS mode, that is, the network device can control the WBPS mode flexibly, thereby ensuring the performance of the WUR in the Dual Coverage scenario and improving the WUR based terminal power saving effect.

### BRIEF DESCRIPTION OF THE DRAWINGS

FIG. 1 is a schematic diagram of a communication system architecture to which embodiments of the present disclosure are applied.
FIG. 2 is a flowchart of a wireless communication method according to an embodiment of the present disclosure.
FIG. 3 is a schematic diagram of a WZ according to an embodiment of the present disclosure.
FIG. 4 is a schematic diagram of the first offset and the second offset according to an embodiment of the present disclosure.
FIG. 5 is a schematic diagram of the fourth threshold and the fifth threshold according to an embodiment of the present disclosure.
FIG. 6 is a schematic block diagram of a terminal device according to an embodiment of the present disclosure.
FIG. 7 is a schematic block diagram of a network device according to an embodiment of the present disclosure.
FIG. 8 is a schematic block diagram of a communication device according to an embodiment of the present disclosure.
FIG. 9 is a schematic block diagram of an apparatus according to an embodiment of the present disclosure.
FIG. 10 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Regarding the embodiments in the present disclosure, all other embodiments obtained by those skilled in the art without creative work fall within the scope of protection of the present disclosure.

The technical solutions of the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of the NR system, a LTE-based access to unlicensed spectrum (LTE-U) system, a NR-based access to unlicensed spectrum (NR-U), a Non-Terrestrial Networks (NTN) system, a Universal Mobile Telecommunication System (UMTS), a Wireless Local Area Networks (WLAN), an internet of things (IoT), a Wireless Fidelity (WiFi), a 5th-Generation (5G) system, a 6th-Generation (6G) system, or other communication system, etc.

Generally, conventional communication systems support a limited number of connections and are easy to implement. However, with the development of communication technology, mobile communication systems will support not only conventional communication, but also, for example, Device to Device (D2D) communication, Machine to Machine (M2M) communication, Machine Type Communication (MTC), Vehicle to Vehicle (V2V) communication, sidelink (SL) communication, Vehicle to everything (V2X) communication, and the like. The embodiments of the present disclosure may also be applied to these communication systems

In some embodiments, the communication system in the embodiments of the present disclosure may be applied to a Carrier Aggregation (CA) scenario, a Dual Connectivity (DC) scenario, a Standalone (SA) network layout scenario, or a Non-Standalone (NSA) network layout scenario.

In some embodiments, the communication system in the embodiments of the present disclosure may be applied to an unlicensed spectrum. The unlicensed spectrum may also be regarded as a shared spectrum. Alternatively, the communication system in the embodiments of the present disclosure may also be applied to a licensed spectrum. The licensed spectrum may also be regarded as a non-shared spectrum.

In some embodiments, the communication system in the embodiments of the present disclosure may be applied to the FR1 band (corresponding to the band range of 410 MHz to 7.125 GHz), the FR2 band (corresponding to the band range of 24.25 GHz to 52.6 GHz), and the new band, such as the high band corresponding to the band range of 52.6 GHz to 71 GHz or the band range of 71 GHz to 114.25 GHz.

The embodiments of the present disclosure describe various embodiments in combination with a network device and a terminal device. The terminal device may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, and the like.

The terminal device may be a STATION (ST) in a WLAN, may be a cellular telephone, a cordless telephone, a Session Initiation Protocol (SIP) telephone, a Wireless Local Loop (WLL) station, a Personal Digital Assistant (PDA) device, a handheld device with wireless communication function, a computing device or other processing device connected to a wireless modem, a vehicle-mounted device, a wearable device, an IoT device, a terminal device in a next generation communication system such as an NR network, or a terminal device in a future evolved Public Land Mobile Network (PLMN).

In an embodiment of the present disclosure, the terminal device may be deployed on land, (for example, indoor or outdoor, handheld, wearable, or vehicle-mounted). The terminal device may also be deployed on the water (for example, on a ship). The terminal device may also be deployed in the air (for example, on aircraft, balloons and satellites, etc.).

In some embodiments, the terminal device may be a Mobile Phone, a tablet (Pad), a computer with wireless transceiver function, a Virtual Reality (VR) device, an Augmented Reality (AR) device, a wireless terminal device in industrial control, a wireless terminal device in self-driving, a wireless terminal device in remote medical, a wireless terminal device in smart grid, a wireless terminal device in transportation safety, a wireless terminal device in smart city or smart home, a vehicle-mounted communication device, a IoT communication device, a wireless communication chip/an application specific integrated circuit (ASIC)/ a System on Chip (SoC), etc.

As an example and not limitation, in the embodiments of the present disclosure, the terminal device may also be a wearable device. The wearable device may also be referred to as a wearable smart device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices comprise devices of full functions, large size and realizing complete or partial functions without relying on smart phones, such as a smart watch or smart glasses, and devices that only focuses on a certain type of application functions and needs to be used in cooperation with other devices such as smart phones, for example, various smart bracelets, smart jewelries, etc. which may detect physical signs.

In the embodiments of the present disclosure, the network device may be a device for communicating with a mobile device. The network device may be an Access Point (AP) in WLAN, a Base Transceiver Station (BTS) in GSM or CDMA, a base station (NodeB, NB) in WCDMA, an Evolutional Node B (eNB or eNodeB) in LTE, a relay station, an AP, a vehicle-mounted device, a wearable device, a network device or a base station (gNB) or a Transmission Reception Point (TRP) in an NR network, or a network device in a future evolved PLMN network or a network device in an NTN network, or the like.

By way of example and not limitation, in embodiments of the present disclosure, the network device may have mobile characteristics, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. In some embodiments, the network device may also be a base station disposed on positions such as land, water area, or the like.

In the embodiments of the present disclosure, the network device may provide services for the cell, the terminal device communicates with the network device through transmission resources (for example, frequency domain resources, or spectrum resources) used by the cell, the cell may be a cell corresponding to the network device (for example, base station), the cell may belong to a macro base station, or belong to a base station corresponding to a Small cell. The Small cell may include a Metro cell, a Micro cell, a Pico cell, a Femto cell, and the like. These small cells have the characteristics of small coverage and low transmission power, and are suitable for providing high-speed data transmission services.

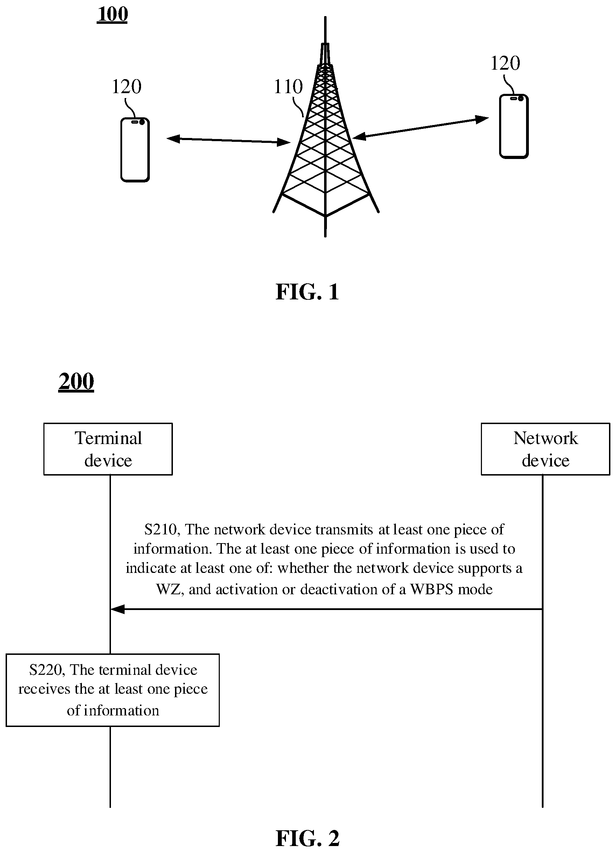

Exemplarily, a communication system 100 to which the embodiments of the present disclosure are applied is illustrated in FIG. 1. The communication system 100 may include a network device 110, which may be a device that communicates with a terminal device 120 (or referred to as a communication terminal, a terminal). The network device 110 may provide communication coverage for a particular geographic area and may communicate with terminal devices located within the coverage range.

FIG. 1 exemplarily illustrates one network device and two terminal devices. In some embodiments, the communication system 100 may include multiple network devices and another number of terminal devices may be included within the coverage range of each network device, which is not limited by the embodiments of the present disclosure.

In some embodiments, the communication system 100 may further include other network entities such as a network controller and a mobility management entity, which is not limited in the embodiments of the present disclosure.

It should be understood that a device having a communication function in the network/system in the embodiments of the present disclosure may be referred to as a communication device. Taking the communication system 100 illustrated in FIG. 1 as an example, the communication device may include a network device 110 and terminal devices 120 having a communication function. The network device 110 and the terminal devices 120 may be specific devices described above, which will not be repeated here. The communication device may also include other devices in the communication system 100, such as other network entities such as a network controller and a mobility management entity, which are not limited in the embodiments of the present disclosure.

It should be understood that the terms "system" and "network" are often used interchangeably herein. Herein, the term "and/or" is merely used for describing an association relationship of associated objects, which indicates that there may be three relationships. For example, A and/or B may represent that there are three situations: A exists alone, A and B exist simultaneously, or B exists alone. In addition, the character "/" in the present disclosure generally indicates that there is a "or" relationship between the associated objects

It should be understood that the present disclosure relates to the first communication device and the second communication device. The first communication device may be a terminal device such as a mobile phone, a machine facility, a Customer Premise Equipment (CPE), an industrial device, a vehicle, or the like. The second communication device may be a peer communication device of the first communication device, such as a network device, a mobile phone, an industrial device, a vehicle, or the like. In the embodiments of the present disclosure, the first communication device may be a terminal device, and the second communication device may be a network device (i.e., uplink communication or downlink communication). Alternatively, the first communication device may be the first terminal, and the second communication device may be the second terminal (i.e., SL communication).

The terms used in the embodiments of the present disclosure is for the purpose of explanation of specific embodiments of the present disclosure only, and is not intended to limit the present disclosure. The terms "first", "second", "third" and "fourth" etc. in the description and claims of the present disclosure and the accompanying drawings are used to distinguish different objects, and are not used to describe a specific order. Furthermore, the terms "including" and "having" and any variations thereof are intended to cover non-exclusive inclusions.

It should also be understood that the "indication" mentioned in the embodiments of the present disclosure may be a direct indication, an indirect indication, or represent an associated relationship. For example, A indicates B, which may mean that A directly indicates B, for example, B can be acquired by A. It may also mean that A indicates B indirectly, for example, A indicates C, and B may be acquired through C. It may also represent that there is an association relationship between A and B.

In the description of the embodiments of the present disclosure, the term "correspondence" mentioned in the embodiments of the present disclosure may represent that there is a direct correspondence or indirect correspondence between the two objects, may represent that there is an associated relationship between the two objects, or may represent a relationship between indicating and being instructed, configuring and being configured, or the like.

In the embodiment of the present disclosure, the "predefined" or "preconfigured" mentioned may be realized by storing corresponding codes, tables, or other methods that can be used to indicate relevant information in advance in devices (including, for example, the terminal device and the network device), and specific implementations are not limited in the present disclosure. The specific implementation is not limited in the present disclosure. For example, "predefined" may refer to "defined" in the protocol.

In the embodiments of the present disclosure, the "protocol" may refer to a standard protocol in the field of communication, for example, may be an evolution of an existing protocol related to an LTE protocol, an NR protocol, a Wi-Fi protocol, or other communication systems related thereto, and the protocol type is not limited in the present disclosure.

In order to facilitate understanding of the technical solutions of the embodiments of the present disclosure, the WUR based terminal power saving related to the present disclosure will be described.

The WUR has the characteristics of extremely low cost, extremely low complexity and extremely low power consumption. The WUR may receive the WUS by a method based on envelope detection. Therefore, the modulation scheme, the waveform, and the like of the WUS received by the WUR are different from that of a signal carried by a Physical Downlink Control Channel (PDCCH). The WUS may be an envelope signal obtained by performing Amplitude Shift Keying (ASK) modulation on the carrier signal. The demodulation of the envelope signal is also completed mainly based on the energy provided by the wireless radio frequency signal to drive the low power circuit, so the WUR may be passive. The WUR may also be powered by the terminal. No matter which power supply mode, the WUR greatly reduces power consumption compared with the main radio of the terminal. The WUR may be combined with the terminal as an additional module of the main radio of the terminal, or the WUR may be used as a wake-up function module of the terminal alone.

Specifically, the WUR receives a WUS. The WUR may instruct the terminal to initiate the main radio if the main radio of the terminal is needed to be turned on, for example, the WUR instruct the terminal to initiate the main radio by a back scattering signal. Otherwise, the main radio of the terminal may be in a dormant or off state.

In order to facilitate understanding of the technical solutions of the embodiments of the present disclosure, the technical solutions of the present disclosure will be described in detail below with reference to specific examples. The following related technologies may be arbitrarily combined with the technical solutions of the embodiments of the present disclosure as optional solutions, and all of them belong to the scope of protection of the embodiments of the present disclosure. Embodiments of the present disclosure include at least some of the following.

FIG. 2 is a flowchart of a wireless communication method 200 according to an embodiment of the present disclosure. As illustrated in FIG. 2, the wireless communication method 200 may include at least some of the following contents.

In operation S210, the network device transmits at least one piece of information. The at least one piece of information is used to indicate at least one of: whether the network device supports a WZ, and activation or deactivation of a WBPS mode.

In operation S220, the terminal device receives the at least one piece of information.

In the embodiments of the present disclosure, the terminal device may determine, based on the at least one piece of information, whether the network device supports the WZ, and/or activation or deactivation of the WBPS mode.

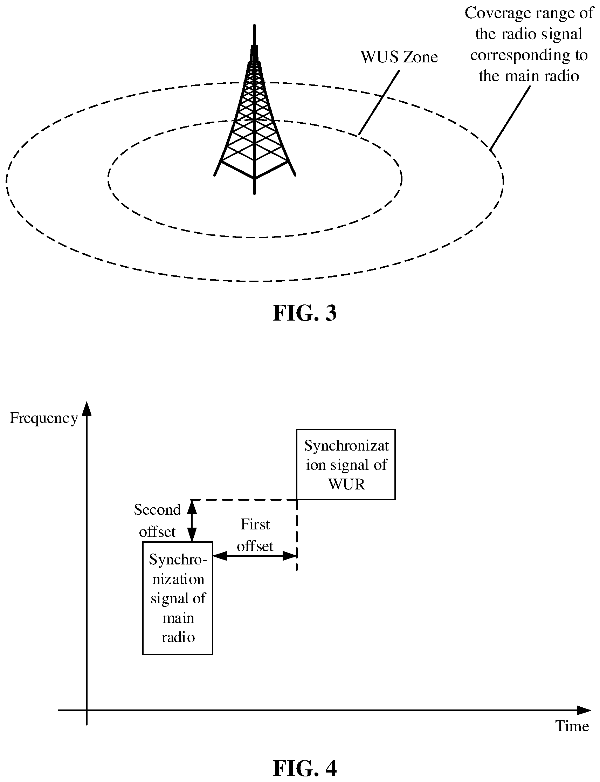

In the embodiments of the present disclosure, the coverage range of the WUS corresponding to the WUR of the terminal device is different from the coverage range of the radio signal corresponding to the main radio of the terminal device. The coverage range of the WUS corresponding to the WUR of the terminal device may be referred to as a WUS Zone (WZ). Specifically, for example, in a Dual Coverage scenario, the WZ may be illustrated in FIG. 3.

It should be noted that the embodiments of the present disclosure may also be applied to the following case. The coverage range of the WUS corresponding to the WUR of the terminal device is only logically different from the coverage range of the radio signal corresponding to the main radio of the terminal device, but the coverage ranges in the actual geographical area are consistent.

It should be understood that the coverage range of the WUS corresponding to the WUR may also be referred to as other names similar to the WZ, which is not limited in the embodiments of the present disclosure.

It should be noted that the power consumption of the WUR is low, for example, the power consumption of the WUR is less than a preset value. The WUR may obtain power through the terminal device to which the WUR belongs, or the WUR may, similar to a zero-power device, obtain power through power harvesting to be used for communication, information harvesting and processing. Specifically, for example, the WUR may obtain power through wireless power supply methods such as wireless radio frequency signals, solar energy, pressure or temperature.

In the embodiments of the present disclosure, the WUR may also be referred to as a low-power receiver or a zero-power receiver, or a similar name, which is not limited in the present disclosure.

In some embodiments, the WUS may also be a power supply signal of the WUR.

In some embodiments, the WBPS mode is mainly deployed in dense or indoor scenarios and it is not required that every network device (such as a gNB) supports the WZ. Even if the network device (such as a gNB) supports the WZ and the WBPS mode, a terminal device having a WUR and a main radio may activate the WUR to reduce power consumption. Alternatively, the network device (such as a gNB) may not always activate the WBPS mode. For example, in some cases, the terminal device in the WZ may disable the power saving mode to achieve optimal performance.

In some embodiments, the at least one piece of information includes the first information. The first information is used to indicate the activation of the WBPS mode, and the network device supports the WZ by default.

Specifically, for example, the first information occupies one bit. A value of 0 is used to indicate the activation of the WBPS mode, or a value of 1 is used to indicate the activation of the WBPS mode. Alternatively, the bit occupied by the first information may be a reserved bit in a signaling carrying the first information, or one bit in an information field in a signaling carrying the first information may be multiplexed by the first information.

Specifically, for another example, the first information occupies one bit. One bit in an information field in a signaling carrying the first information may be multiplexed by the first information.

In some embodiments, the first information is carried by a system broadcast. That is, all terminals within the WZ may activate the WBPS mode and perform corresponding power saving operations.

In some embodiments, the first information is carried by a broadcasted synchronization signal in a Master Information Block (MIB) or a System Information Block 1 (SIB1). Alternatively, the first information may be carried through other signals or information fields in the MIB or SIB1, which is not limited in the embodiments of the present disclosure.

Alternatively, the first information may be carried by the SIB x, and the value of x may be a value other than 1 in the system message.

In some embodiments, the first information is received by the terminal device during an initial synchronization process. That is, when the terminal device performs the initial synchronization, the terminal device may obtain the first information to know whether the current network device (such as gNB) supports the WBPS mode.

In some embodiments, the first information is carried by one of: a Radio Resource Control (RRC) signaling, a Media Access Control Control Element (MAC CE), and Downlink Control Information (DCI). That is, the activation of the WBPS mode is indicted independently for each UE, which may increase the flexibility of the indication of the network device.

In some embodiments, the at least one piece of information includes the second information and the third information. The second information is used to indicate that the network device supports the WZ, and the third information is used to indicate the activation or deactivation of the WBPS mode. That is, in a case that the network device supports the WZ, the network device may further indicate the activation or deactivation of the WBPS mode. In a case that the network device indicates the activation of the WBPS mode, the terminal device activates the WBPS mode and performs a corresponding power saving operation.

Specifically, for example, the second information occupies one bit. A value of 0 is used to indicate that the network device supports the WZ, or a value of 1 is used to indicate that the network device supports the WZ. Alternatively, the bit occupied by the second information may be a reserved bit in a signaling carrying the second information, or one bit in an information field in a signaling carrying the second information may be multiplexed by the second information.

Specifically, for another example, the second information occupies one bit. One bit in an information field in a signaling carrying the second information may be multiplexed by the second information.

Specifically, for example, the third information occupies one bit. A value of 0 is used to indicate the activation of the WBPS mode, and a value of 1 is used to indicate the deactivation of the WBPS mode. Alternatively, a value of 1 is used to indicate the activation of the WBPS mode, and a value of 0 is used to indicate the deactivation of the WBPS mode. Alternatively, the bit occupied by the third information may be a reserved bit in a signaling carrying the third information, or one bit in an information field in a signaling carrying the third information may be multiplexed by the third information.

In some embodiments, both the second information and the third information are carried by a system broadcast. That is, in a case that the network device indicates the activation of the WBPS mode, all terminals within the WZ may activate the WBPS mode and perform corresponding power saving operations.

In some embodiments, both the second information and the third information are carried by a broadcasted synchronization signal in the MIB or SIB1. Alternatively, the second information and the third information may be carried through other signals or information fields in the MIB or SIB1, which is not limited in the embodiments of the present disclosure.

In some embodiments, both the second information and the third information may be carried by the SIB x, and the value of x may be a value other than 1 in the system message.

In some embodiments, both the second information and the third information are received by the terminal device during the initial synchronization process. That is, when the terminal device performs initial synchronization, the terminal device may know whether the current network device (such as gNB) supports the WZ and whether to activate the WBPS mode.

In some embodiments, the second information is carried by a system broadcast, and/or, the third information is carried by one of: a RRC signaling, a MAC CE, and DCI.

That is, all UEs within the broadcast coverage range may be indicated through broadcast that the network device supports the WZ, and for each UE, the activation or deactivation of the WBPS mode is indicated independently, which may increase the flexibility of indication of the network device.

In some embodiments, the second information is carried by a broadcast synchronization signal in the MIB or SIB1. Alternatively, the second information may be carried through other signals or information fields in the MIB or SIB1, which is not limited in the embodiments of the present disclosure.

In some embodiments, the second information is received by the terminal device during an initial synchronization process.

In some embodiments, before receiving the at least one piece of information, the terminal device transmits the first request information. The first request information is used to request the activation of the WBPS mode. For example, when the terminal device has a low battery, the terminal device transmits the first request information.

Specifically, for example, the terminal device transmits the first request information to the network device. After receiving the first request information, the network device may indicate the activation of the WBPS mode through a RRC signaling, a MAC CE or DCI.

In some embodiments, the terminal device transmits the fourth information. The fourth information is used to indicate that the terminal device is in the WBPS mode. That is, the terminal device has activated the WBPS mode.

Alternatively, the fourth information is carried by a measurement report. Alternatively, the fourth information may be carried by one of: a RRC signaling, a MAC CE, and Uplink Control Information (UCI).

In some embodiments, the terminal device may report the first capability information. The first capability information is used to indicate whether the terminal device supports WUS. Alternatively, the first capability information may be carried by UCI or a capability report of the terminal device.

In some embodiments, in a case that at least one piece of information indicates the activation of the WBPS mode, within the WZ, synchronization between the WUR of the terminal device and the network device is implemented based on a main radio of the terminal device.

Specifically, when a terminal device is within the WZ, both the WUR of the terminal device and the main radio of the terminal device need to be synchronized with the network device (such as a gNB). Since the WUR and the main radio may have different requirements for synchronization accuracy, the implementation of the synchronization between the main radio and the network device does not necessarily mean the implementation of the synchronization between the WUR and the network device. The synchronization between the WUR and the network device may rely on the synchronization between the main radio and the network device, in which case it is not necessary to design and configure a synchronization signal dedicated to the WUR, and resource efficiency may be improved.

In some embodiments, the synchronization between the WUR and the network device is implemented through a calibration performed by the main radio for the WUR.

In some embodiments, the calibration performed by the main radio for the WUR includes: a calibration performed by the main radio after the main radio is awakened periodically by the WUR, or, a calibration performed by the main radio for the WUR after the main radio is awakened by the WUR and is synchronized with the network device, after the main radio losing synchronization.

Specifically, for example, in a case that the calibration performed by the main radio for the WUR is the calibration performed by the main radio after the main radio is awakened periodically by the WUR, the period that the WUR wakes up the main radio is stipulated by the protocol, or the period that the WUR wakes up the main radio is configured by the network device. In this case, the main radio is synchronized with the network device.

Specifically, for example, in a case that the calibration performed by the main radio for the WUR is the calibration performed by the main radio for the WUR after the main radio is awakened by the WUR and is synchronized with the network device, after the main radio losing synchronization, the main radio returns to a dormant state or the main radio returns to a power-off state, after calibrating the WUR. That is, after the main radio loses synchronization, the WUR wakes up the main radio, and the main radio searches for the SSB after being awakened, and helps to calibrate the WUR after synchronization is implemented, then the main radio returns to a deep sleep state or power-off state.

In some embodiments, in a case that the at least one piece of information indicates the activation of the WBPS mode, within the WZ, a synchronization between the WUR of the terminal device and the network device is implemented based on a synchronization signal of the WUR. That is, a dedicated synchronization signal may be configured for the WUR.

In some embodiments, a time-frequency resource corresponding to the synchronization signal of the WUR is located at a fixed position of a frequency band. Alternatively, the time-frequency resource corresponding to the synchronization signal of the WUR is located at the center of the entire frequency band. That is, the position and size of the time-frequency resource corresponding to the synchronization signal of the WUR may be fixed.

In some embodiments, the time-frequency resource corresponding to the synchronization signal of the WUR is stipulated by a protocol, or the time-frequency resource corresponding to the synchronization signal of the WUR is semi-statically configured by the network device, or the time-frequency resource corresponding to the synchronization signal of the WUR is dynamically configured by the network device.

In some embodiments, the time-frequency resource corresponding to the synchronization signal of the WUR is determined based on the time-frequency resource corresponding to the synchronization signal of the main radio of the terminal device. That is, there is a certain correlation relationship between the time-frequency resource corresponding to the synchronization signal of the WUR and the time-frequency resource corresponding to the synchronization signal of the main radio.

For example, the synchronization signal of the main radio may be a Synchronization Signal Block (SSB).

In some embodiments, a fixed offset exists between the time-frequency resource corresponding to the synchronization signal of the WUR and the time-frequency resource corresponding to the synchronization signal of the main radio.

In some embodiments, the first offset exists between the time domain resource corresponding to the synchronization signal of the WUR and the time domain resource corresponding to the synchronization signal of the main radio, and/or, the second offset exists between the frequency domain resource corresponding to the synchronization signal of the WUR and the frequency domain resource corresponding to the synchronization signal of the main radio. Alternatively, the size of the time domain resource corresponding to the synchronization signal of the WUR may be fixed.

Alternatively, the value of the first offset may be a positive value or a negative value, which is not limited in the embodiments of the present disclosure.

Alternatively, the value of the second offset may be a positive value or a negative value, which is not limited in the embodiments of the present disclosure.

For example, the first offset is four Orthogonal frequency-division multiplexing (OFDM) symbols, and the second offset is 0.

In some embodiments, the first offset may be an offset between a start position of a time domain resource corresponding to a synchronization signal of the WUR and a start position of a time domain resource corresponding to a synchronization signal of the main radio. Alternatively, the first offset may be an offset between an end position of the time domain resource corresponding to the synchronization signal of the WUR and an end position of the time domain resource corresponding to the synchronization signal of the main radio. Alternatively, the first offset may be an offset between the start position of the time domain resource corresponding to the synchronization signal of the WUR and the end position of the time domain resource corresponding to the synchronization signal of the main radio. Alternatively, the first offset may be an offset between a certain specific position in the time domain resource corresponding to the synchronization signal of the WUR and a certain specific position in the time domain resource corresponding to the synchronization signal of the main radio.

In some embodiments, the second offset may be an offset between a start position of a frequency domain resource corresponding to a synchronization signal of the WUR and a start position of a frequency domain resource corresponding to a synchronization signal of the main radio. Alternatively, the second offset may be an offset between an end position of the frequency domain resource corresponding to the synchronization signal of the WUR and an end position of the frequency domain resource corresponding to the synchronization signal of the main radio. Alternatively, the second offset may be an offset between the start position of the frequency domain resource corresponding to the synchronization signal of the WUR and the end position of the frequency domain resource corresponding to the synchronization signal of the main radio. Alternatively, the second offset may be an offset between a certain specific position in the frequency domain resource corresponding to the synchronization signal of the WUR and a certain specific position in the frequency domain resource corresponding to the synchronization signal of the main radio.

Specifically, for example, the time-frequency resource corresponding to the synchronization signal of the WUR and the time-frequency resource corresponding to the synchronization signal of the main radio may be illustrated in FIG. 4. The first offset may be the offset between the start position of the time-domain resource corresponding to the synchronization signal of the WUR and the end position of the time-domain resource corresponding to the synchronization signal of the main radio, and the second offset may be the offset between the start position of the frequency-domain resource corresponding to the synchronization signal of the WUR and the end position of the frequency-domain resource corresponding to the synchronization signal of the main radio.

In some embodiments, the synchronization signal of the WUR and the synchronization signal of the main radio are Quasi-co-located (QCL). Alternatively, the QCL type corresponding to the synchronization signal of the WUR and the synchronization signal of the main radio is a QCL type D.

In some embodiments, the terminal device may assume that a spatial filter corresponding to the synchronization signal of the WUR has same mode as a spatial filter corresponding to the synchronization signal of the main radio.

The spatial filter may also be referred to as a beam, a beam pair, a spatial relationship, a spatial setting, a spatial domain filter, or a reference signal.

In some embodiments, the beam of the synchronization signal of the WUR is configured to have same mode as the beam of the synchronization signal of the main radio, so that once the main radio is awakened, the main radio has some prior information about the beam of the synchronization signal to be synchronized. In this aspect, the synchronization signal of the WUR may be configured to be QCLed, and the synchronization signal of the main radio has at least a QCL type D. Alternatively, the terminal device may default that the beam of the synchronization signal of the WUR uses the same mode as the beam of the synchronization signal of the main radio, or may default that the synchronization signal of the WUR and the synchronization signal of the main radio may be received by using the same reception beam. Furthermore, the same beam identification (ID) may be explicitly or implicitly configured for the beam of the synchronization signal of the WUR and the beam of the synchronization signal of the main radio.

In some embodiments, a period of the synchronization signal of the WUR is n times a period of the synchronization signal of the main radio, and n is a positive integer and n ≥ 1. Alternatively, the value of n is obtained from the system information.

Specifically, since the synchronization signal of the WUR may have a longer duration than the synchronization signal of the main radio, the period of the synchronization signal of the WUR may be n times the period of the synchronization signal of the main radio, and n may be configured in the system information.

In some embodiments, in a case that the at least one piece of information indicates the activation of the WBPS mode and the main radio of the terminal device is in an awake state, measurement(s) within the WZ for a serving cell and/or neighboring cell(s) is performed by the main radio.

In some embodiments, whether the terminal device is within the WZ is determined by a distance between the terminal device and the network device.

In some embodiments, in a case that a distance between the terminal device and the network device is less than or equal to the first threshold, the terminal device is within the WZ, and/or, in a case that the distance between the terminal device and the network device is greater than the first threshold, the terminal device is outside the WZ.

In some embodiments, in a case that a distance between the terminal device and the network device is less than the first threshold, the terminal device is within the WZ, and/or, in a case that the distance between the terminal device and the network device is greater than or equal to the first threshold, the terminal device is outside the WZ.

In some embodiments, the first threshold may be stipulated by a protocol, or the first threshold may be configured or indicated by the network device.

In some embodiments, whether the terminal device is within the WZ is determined based on a sensitivity of the WUR of the terminal device and a Reference Signal Received Power (RSRP) obtained by the main radio measuring the SSB.

Specifically, for example, the threshold x may be determined based on the sensitivity of the WUR of the terminal device. In a case that the RSRP obtained by the main radio measuring the SSB is greater than or equal to the threshold x, the terminal device is within the WZ, and/or, in a case that the RSRP obtained by the main radio measuring the SSB is less than the threshold x, the terminal device is outside the WZ. Alternatively, in a case that the RSRP obtained by the main radio measuring the SSB is greater than the threshold x, the terminal device is within the WZ, and/or, in a case that the RSRP obtained by the main radio measuring the SSB is less than or equal to the threshold x, the terminal device is outside the WZ.

In some embodiments, once the terminal device is within the WZ, if the network device (such as a gNB) indicates in the system information the activation of the WBPS mode, the terminal device may operate in the WBPS mode without requesting permission from the network device (such as a gNB). Alternatively, the terminal device may notify the network device (such as the gNB) through a measurement report that the terminal device is operating in the WBPS mode, or the terminal device may separately notify the network device that the terminal device is operating in the WBPS mode. Alternatively, the terminal device may transmit a WBPS mode activation request to the network device (such as the gNB), and the network device (such as the gNB) may activate the WBPS mode through RRC/MAC/DCI signaling.

In some embodiments, in a case that the at least one piece of information indicates the activation of the WBPS mode and the main radio of the terminal device is in a dormant state, a measurement within the WZ for a serving cell is performed by the WUR of the terminal device, and/or measurement(s) within the first zone for the serving cell and/or neighboring cell(s) is performed by the main radio; and/or, a measurement within the second zone for the serving cell is performed by the WUR of the terminal device, and/or the measurement within the second zone for the serving cell is performed by the main radio.

The main radio is awakened by the WUR, the first zone and the second zone are both outside the WZ, and the second zone is between the first zone and the WZ.

It should be noted that if the main radio is in a dormant state, the WUR may perform measurement. However, the granularity of the Analog-to-Digital Converter (ADC) used for measurement by the WUR is very rough, and the measurement result is unreliable, so it is impossible to accurately identify the inside of the WZ and the outside of the WZ. Based on this, the first zone and the second zone are designed in this embodiment. That is, the measurement based on the WUR cannot accurately determine whether the second zone is within the WZ or outside the WZ, and the second zone may be an ambiguity zone.

In some embodiments, within the second zone, the main radio being awakened by the WUR includes that: the main radio is periodically awakened by the WUR, or the main radio is awakened by the WUR on demand.

Alternatively, the periodic information for the WUR periodically waking up the main radio is stipulated by the protocol, or the periodic information for the WUR periodically waking up the main radio is configured or indicated by the network device.

In some embodiments, a zone where the terminal device is located is determined by a distance between the terminal device and the network device.

In some embodiments, in a case that a distance between the terminal device and the network device is less than the second threshold, the terminal device is within the WZ, and/or, in a case that the distance between the terminal device and the network device is greater than or equal to the second threshold and less than or equal to the third threshold, the terminal device is within the second zone, and/or, in a case that the distance between the terminal device and the network device is greater than the third threshold, the terminal device is within the first zone.

In some embodiments, in a case that a distance between the terminal device and the network device is less than or equal to the second threshold, the terminal device is within the WZ, and/or, in a case that the distance between the terminal device and the network device is greater than the second threshold and less than the third threshold, the terminal device is within the second zone, and/or, in a case that the distance between the terminal device and the network device is greater than or equal to the third threshold, the terminal device is within the first zone.

In some embodiments, a zone where the terminal device is located is determined based on a signal strength obtained by the WUR of the terminal device measuring a synchronization signal.

In some embodiments, in a case that the signal strength measured by the WUR of the terminal device is greater than the fourth threshold, the terminal device is within the WZ, and/or, in a case that the signal strength measured by the WUR of the terminal device is less than or equal to the fourth threshold and greater than or equal to the fifth threshold, the terminal device is within the second zone, and/or, in a case that the signal strength measured by the WUR of the terminal device is less than the fifth threshold, the terminal device is within the first zone.

In some embodiments, in a case that the signal strength measured by the WUR of the terminal device is greater than or equal to the fourth threshold, the terminal device is within the WZ, and/or, in a case that the signal strength measured by the WUR of the terminal device is less than the fourth threshold and greater than the fifth threshold, the terminal device is within the second zone, and/or, in a case that the signal strength measured by the WUR of the terminal device is less than or equal to the fifth threshold, the terminal device is within the first zone.

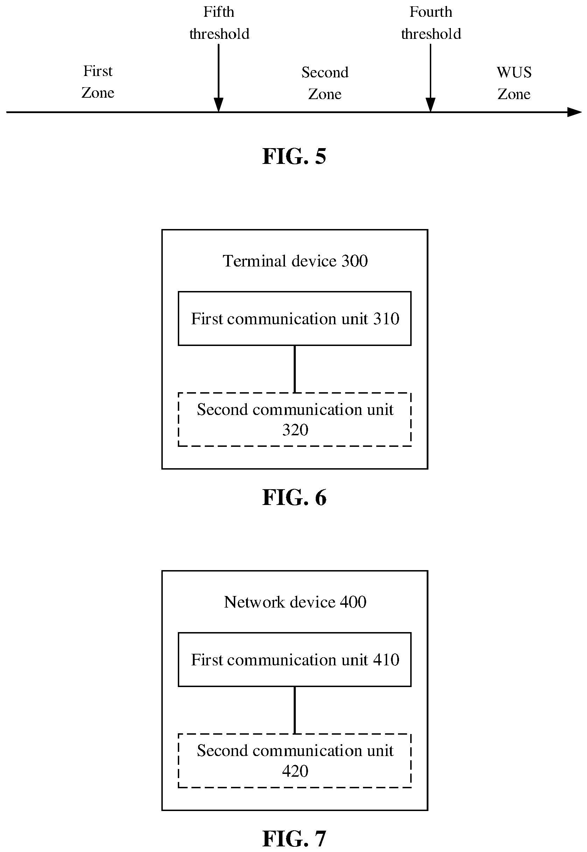

For example, the fourth threshold value and the fifth threshold value may be illustrated in FIG. 5. Specifically, the first zone, the second zone, and the WZ may be defined by the signal strength measured by the WUR, the fourth threshold and the fifth threshold.

Therefore, in the embodiments of the present disclosure, the network device can indicate whether the network device supports the WZ, and indicate activation or deactivation of the WBPS mode, that is, the network device can flexibly control the WBPS mode, thereby ensuring the performance of the WUR in the Dual Coverage scenario, and improving the WUR based terminal power saving effect. Further, embodiments of the present disclosure clarify a solution of synchronizing the WUR with the network device and a solution of WUS zone measurement, thereby improving performance of the WUR in the Dual Coverage scenario.

The method embodiments of the present disclosure are described in detail above with reference to FIG. 2 to FIG. 5, and the apparatus embodiments of the present disclosure are described in detail below with reference to FIG. 6 to FIG. 10. It should be understood that the apparatus embodiments and the method embodiments correspond to each other, and similar descriptions may be made with reference to the method embodiments.

FIG. 6 illustrates a schematic block diagram of a terminal device 300 according to an embodiment of the present disclosure. As illustrated in FIG. 6, the terminal device 300 includes the first communication unit 310.

The first communication unit 310 is configured to receive at least one piece of information.

The at least one piece of information is used to indicate at least one of: whether a network device supports a WZ, or, activation or deactivation of a WBPS mode.

In some embodiments, the at least one piece of information includes the first information. The first information is used to indicate the activation of the WBPS mode, and the network device supports the WZ by default.

In some embodiments, the first information is carried by a system broadcast.

In some embodiments, the first information is carried by a broadcasted synchronization signal in a MIB or a SIB1.

In some embodiments, the first information is received by the terminal device during an initial synchronization process.

In some embodiments, the first information is carried by one of: a RRC signaling, a MAC CE, and DCI.

In some embodiments, the at least one piece of information includes the second information and the third information. The second information is used to indicate that the network device supports the WZ, and the third information is used to indicate the activation or deactivation of the WBPS mode.

In some embodiments, both the second information and the third information are carried by a system broadcast.

In some embodiments, both the second information and the third information are carried by a broadcast synchronization signal in a MIB or a SIB1.

In some embodiments, both the second information and the third information are received by the terminal device during an initial synchronization process.

In some embodiments, the second information is carried by a system broadcast, and/or, the third information is carried by one of: a RRC signaling, a MAC CE and DCI.

In some embodiments, the second information is carried by a broadcasted synchronization signal in a MIB or a SIB1.

In some embodiments, the second information is received by the terminal device during an initial synchronization process.

In some embodiments, the terminal device 300 further includes the second communication device 320.

The second communication device 320 is configured to, before receiving the at least one piece of information, transmit the first request information. The first request information is used to request the activation of the WBPS mode.

In some embodiments, the terminal device 300 further includes the second communication device 320.

The second communication device 320 is configured to transmit the fourth information. The fourth information is used to indicate that the terminal device is in the WBPS mode.

In some embodiments, the fourth information is carried by a measurement report.

In some embodiments, in a case that the at least one piece of information indicates the activation of the WBPS mode, within the WZ, synchronization between a WUR of the terminal device and the network device is implemented based on a main radio of the terminal device.

In some embodiments, the synchronization between the WUR and the network device is implemented through a calibration performed by the main radio for the WUR.

In some embodiments, the calibration performed by the main radio for the WUR includes a calibration performed by the main radio after the main radio is awakened periodically by the WUR, or a calibration performed by the main radio for the WUR after the main radio is awakened by the WUR and is synchronized with the network device, after the main radio losing synchronization.

In some embodiments, in a case that the at least one piece of information indicates the activation of the WBPS mode, within the WZ, a synchronization between a WUR of the terminal device and the network device is implemented based on a synchronization signal of the WUR.

In some embodiments, a time-frequency resource corresponding to the synchronization signal of the WUR is located at a fixed position of a frequency band.

In some embodiments, the time-frequency resource corresponding to the synchronization signal of the WUR is located at center of entire frequency band.

In some embodiments, a time-frequency resource corresponding to the synchronization signal of the WUR is stipulated by a protocol, or the time-frequency resource corresponding to the synchronization signal of the WUR is semi-statically configured by the network device, or the time-frequency resource corresponding to the synchronization signal of the WUR is dynamically configured by the network device.

In some embodiments, the time-frequency resource corresponding to the synchronization signal of the WUR is determined based on a time-frequency resource corresponding to a synchronization signal of a main radio of the terminal device.

In some embodiments, a fixed offset exists between the time-frequency resource corresponding to the synchronization signal of the WUR andthe time-frequency resource corresponding to the synchronization signal of the main radio.

In some embodiments, a first fixed offset exists between a time domain resource corresponding to the synchronization signal of the WUR and a time domain resource corresponding to the synchronization signal of the main radio, and/or, a second fixed offset exists between a frequency domain resource corresponding to the synchronization signal of the WUR and a frequency domain resource corresponding to the synchronization signal of the main radio.

In some embodiments, the synchronization signal of the WUR and the synchronization signal of the main radio are QCL.

In some embodiments, a QCL type corresponding to the synchronization signal of the WUR and the synchronization signal of the main radio is a QCL type D.

In some embodiments, a spatial filter corresponding to the synchronization signal of the WUR has same mode as a spatial filter corresponding to the synchronization signal of the main radio.

In some embodiments, a period of the synchronization signal of the WUR is n times a period of the synchronization signal of the main radio, and n is a positive integer and n ≥ 1.

In some embodiments, a value of n is obtained from system information.

In some embodiments, in a case that the at least one piece of information indicates the activation of the WBPS mode and a main radio of the terminal device is in an awake state, measurement(s) for a serving cell and/or neighbor cell(s) is performed by the main radio within the WZ.

In some embodiments, whether the terminal device is within the WZ is determined by a distance between the terminal device and the network device.

In some embodiments, in a case that a distance between the terminal device and the network device is less than or equal to the first threshold, the terminal device is within the WZ, and/or, in a case that the distance between the terminal device and the network device is greater than the first threshold, the terminal device is outside the WZ.

In some embodiments, whether the terminal device is within the WZ is determined based on a sensitivity of the WUR of the terminal device and a RSRP obtained by the main radio measuring the SSB.

In some embodiments, in a case that the at least one piece of information indicates the activation of the WBPS mode and a main radio of the terminal device is in a dormant state, a measurement within the WZ for a serving cell is performed by a WUR of the terminal device, and/or, measurement(s) within the first zone for the serving cell and/or a neighboring cell is(are) performed by the main radio; and/or, a measurement within the second zone for the serving cell is performed by the WUR of the terminal device, and/or, the measurement within the second zone for the serving cell is performed by the main radio.

The main radio is awakened by the WUR, the first zone and the second zone are both outside the WZ, and the second zone is between the first zone and the WZ.

In some embodiments, within the second zone, the main radio being awakened by the WUR includes the main radio being periodically awakened by the WUR, or the main radio being awakened by the WUR on demand.

In some embodiments, a zone where the terminal device is located is determined by a distance between the terminal device and the network device.

In some embodiments, in a case that a distance between the terminal device and the network device is less than the second threshold, the terminal device is within the WZ, and/or, in a case that the distance between the terminal device and the network device is greater than or equal to the second threshold and less than or equal to the third threshold, the terminal device is within the second zone, and/or, in a case that the distance between the terminal device and the network device is greater than the third threshold, the terminal device is within the first zone.

In some embodiments, a zone where the terminal device is located is determined based on a signal strength obtained by the WUR of the terminal device measuring a synchronization signal.

In some embodiments, in a case that the signal strength measured by the WUR of the terminal device is greater than the fourth threshold, the terminal device is within the WZ, and/or, in a case that the signal strength measured by the WUR of the terminal device is less than or equal to the fourth threshold and greater than or equal to the fifth threshold, the terminal device is within the second zone, and/or, in a case that the signal strength measured by the WUR of the terminal device is less than the fifth threshold, the terminal device is within the first zone.

In some embodiments, the above communication unit may be a communication interface or a transceiver, or an input/output interface of a communication chip or a system-on-chip. The above processing unit may be one or more processors.

It should be understood that the terminal device 300 according to the embodiment of the present disclosure may correspond to the terminal device in the method embodiments of the present disclosure. The above and other operations and/or functions of various units in the terminal device 300 are used to implement the corresponding flows of the terminal device in the method 200 illustrated in FIG. 2, which will not be described herein for the sake of brevity.

FIG. 7 illustrates a schematic block diagram of a network device 400 according to an embodiment of the present disclosure. As illustrated in FIG. 7, the network device 400 includes the first communication unit 410.

The first communication unit 410 is configured to transmit at least one piece of information.

The at least one piece of information is used to indicate at least one of: whether the network device supports a WZ, or activation or deactivation of a WBPS mode.

In some embodiments, the at least one piece of information includes the first information. The first information is used to indicate the activation of the WBPS mode, and the network device supports the WZ by default.

In some embodiments, the first information is carried by a system broadcast.

In some embodiments, the first information is carried by a broadcasted synchronization signal in a MIB or a SIB1.

In some embodiments, the first information is transmitted by the network device during an initial synchronization process.

In some embodiments, the first information is carried by one of: a RRC signaling, a MAC CE, and DCI.

In some embodiments, the at least one piece of information includes the second information and the third information. The second information is used to indicate that the network device supports the WZ, and the third information is used to indicate the activation or deactivation of the WBPS mode.

In some embodiments, both the second information and the third information are carried by a system broadcast.

In some embodiments, both the second information and the third information are carried by a broadcast synchronization signal in a MIB or a SIB1.

In some embodiments, both the second information and the third information are transmitted by the network device during an initial synchronization.

In some embodiments, the second information is carried by a system broadcast, and/or, the third information is carried by one of: a RRC signaling, a MAC CE and DCI.

In some embodiments, the second information is carried by a broadcasted synchronization signal in a MIB or a SIB1.

In some embodiments, the second information is transmitted by the network device during an initial synchronization process.

In some embodiments, the network device 400 further includes the second communication unit 420.

The second communication unit 420 is configured to, before transmitting the at least one piece of information, receive the first request information. The first request information is used to request the activation of the WBPS mode.

In some embodiments, the network device 400 further includes the second communication unit 420.

The second communication unit 420 is configured to receive the fourth information. The fourth information is used to indicate that the terminal device is in the WBPS mode.

In some embodiments, the fourth information is carried by a measurement report.

In some embodiments, in a case that the at least one piece of information indicates the activation of the WBPS mode, within the WZ, synchronization between a WUR of the terminal device and the network device is implemented based on a main radio of the terminal device.

In some embodiments, the synchronization between the WUR and the network device is implemented through a calibration performed by the main radio for the WUR.

In some embodiments, the calibration performed by the main radio for the WUR includes a calibration performed by the main radio after the main radio is awakened periodically by the WUR, or a calibration performed by the main radio for the WUR after the main radio is awakened by the WUR and is synchronized with the network device, after the main radio losing synchronization.

In some embodiments, in a case that the at least one piece of information indicates the activation of the WBPS mode, within the WZ, a synchronization between a WUR of the terminal device and the network device is implemented based on a synchronization signal of the WUR.

In some embodiments, a time-frequency resource corresponding to the synchronization signal of the WUR is located at a fixed position in a frequency band.

In some embodiments, the time-frequency resource corresponding to the synchronization signal of the WUR is located at center of entire frequency band.

In some embodiments, a time-frequency resource corresponding to the synchronization signal of the WUR is stipulated by a protocol, or the time-frequency resource corresponding to the synchronization signal of the WUR is semi-statically configured by the network device, or the time-frequency resource corresponding to the synchronization signal of the WUR is dynamically configured by the network device.

In some embodiments, the time-frequency resource corresponding to the synchronization signal of the WUR is determined based on a time-frequency resource corresponding to a synchronization signal of a main radio of the terminal device.

In some embodiments, a fixed offset exists between the time-frequency resource corresponding to the synchronization signal of the WUR and the time-frequency resource corresponding to the synchronization signal of the main radio.

In some embodiments, a first fixed offset exists between a time domain resource corresponding to the synchronization signal of the WUR and a time domain resource corresponding to the synchronization signal of the main radio, and/or, a second fixed offset exists between a frequency domain resource corresponding to the synchronization signal of the WUR and a frequency domain resource corresponding to the synchronization signal of the main radio.

In some embodiments, the synchronization signal of the WUR and the synchronization signal of the main radio are QCL.

In some embodiments, a QCL type corresponding to the synchronization signal of the WUR and the synchronization signal of the main radio is a QCL type D.

In some embodiments, a spatial filter corresponding to the synchronization signal of the WUR has same mode as a spatial filter corresponding to the synchronization signal of the main radio.

In some embodiments, a period of the synchronization signal of the WUR is n times a period of the synchronization signal of the main radio, and n is a positive integer and n ≥ 1.

In some embodiments, a value of n is obtained from system information.

In some embodiments, in a case that the at least one piece of information indicates the activation of the WBPS mode and a main radio of the terminal device is in an awake state, measurement(s) for a serving cell and/or neighbor cell(s) is performed by the main radio within the WZ.

In some embodiments, whether the terminal device is within the WZ is determined by a distance between the terminal device and the network device.

In some embodiments, in a case that a distance between the terminal device and the network device is less than or equal to the first threshold, the terminal device is within the WZ, and/or, in a case that the distance between the terminal device and the network device is greater than the first threshold, the terminal device is outside the WZ.

In some embodiments, whether the terminal device is within the WZ is determined based on a sensitivity of the WUR of the terminal device and a RSRP obtained by the main radio measuring the SSB.

In some embodiments, in a case that the at least one piece of information indicates the activation of the WBPS mode and a main radio of the terminal device is in a dormant state, a measurement within the WZ for a serving cell is performed by a WUR of the terminal device, and/or, measurement(s) within the first zone for the serving cell and/or a neighboring cell is(are) performed by the main radio; and/or, a measurement within the second zone for the serving cell is performed by the WUR of the terminal device, and/or, the measurement within the second zone for the serving cell is performed by the main radio.

The main radio is awakened by the WUR, the first zone and the second zone are both outside the WZ, and the second zone is between the first zone and the WZ.

In some embodiments, within the second zone, the main radio being awakened by the WUR includes the main radio being periodically awakened by the WUR, or the main radio being awakened by the WUR on demand.

In some embodiments, a zone where the terminal device is located is determined by a distance between the terminal device and the network device.

In some embodiments, in a case that a distance between the terminal device and the network device is less than the second threshold, the terminal device is within the WZ, and/or, in a case that the distance between the terminal device and the network device is greater than or equal to the second threshold and less than or equal to the third threshold, the terminal device is within the second zone, and/or, in a case that the distance between the terminal device and the network device is greater than the third threshold, the terminal device is within the first zone.

In some embodiments, a zone where the terminal device is located is determined based on a signal strength obtained by the WUR of the terminal device measuring a synchronization signal.

In some embodiments, in a case that the signal strength measured by the WUR of the terminal device is greater than the fourth threshold, the terminal device is within the WZ, and/or, in a case that the signal strength measured by the WUR of the terminal device is less than or equal to the fourth threshold and greater than or equal to the fifth threshold, the terminal device is within the second zone, and/or, in a case that the signal strength measured by the WUR of the terminal device is less than the fifth threshold, the terminal device is within the first zone.

In some embodiments, the above communication unit may be a communication interface or a transceiver, or an input/output interface of a communication chip or a system-on-chip. The above processing unit may be one or more processors.

It should be understood that the network device 400 according to the embodiment of the present disclosure may correspond to the network device in the method embodiments of the present disclosure. The above and other operations and/or functions of various units in the network device 400 are used to implement the corresponding flows of the network device in the method 200 illustrated in FIG. 2, which will not be described herein for the sake of brevity.

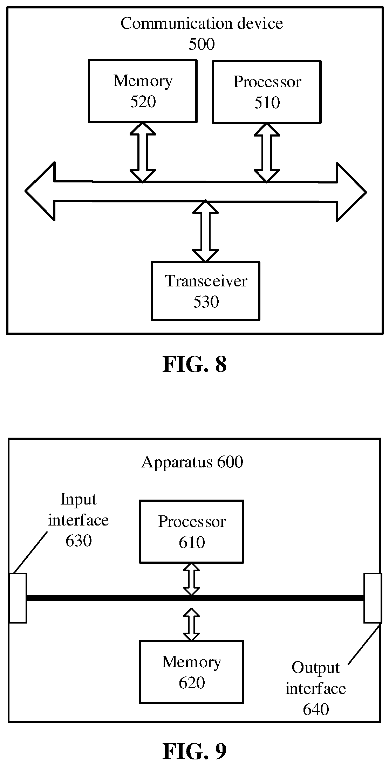

FIG. 8 is a schematic structural diagram of a communication device 500 according to an embodiment of the present disclosure. The communication device 500 illustrated in FIG. 8 includes a processor 510. The processor 510 may invoke and execute a computer program from a memory to implement the method in the embodiments of the present disclosure.

In some embodiments, as illustrated in FIG. 8, the communication device 500 may further include a memory 520. The processor 510 may invoke and execute the computer program from the memory 520 to implement the methods in the embodiments of the present disclosure.

The memory 520 may be a separate device independent of the processor 510 or may be integrated in the processor 510.

In some embodiments, as illustrated in FIG. 8, the communication device 500 may further include a transceiver 530. The processor 510 may control the transceiver 530 to communicate with other devices, specifically, may transmit information or data to other devices, or may receive information or data transmitted by other devices.

The transceiver 530 may include a transmitter and a receiver. The transceiver 530 may further include one or more antennas.

In some embodiments, the processor 510 may implement the function of a processing unit in a terminal device, or the processor 510 may implement the function of a processing unit in a network device, which will not be described herein for the sake of brevity.

In some embodiments, the transceiver 530 may implement the function of the communication unit in the terminal device, which will not be described herein for the sake of brevity.

In some embodiments, the transceiver 530 may implement the function of the communication unit in the network device, which will not be described herein for the sake of brevity.

In some embodiments, the communication device 500 may specifically be the network device in the embodiments of the present disclosure, and the communication device 500 may implement corresponding processes implemented by the network device in various methods of the embodiments of the present disclosure, which will not be described herein for the sake of brevity.

In some embodiments, the communication device 500 may specifically be the terminal device in the embodiments of the present disclosure, and the communication device 500 may implement corresponding processes implemented by the terminal device in various methods of the embodiments of the present disclosure, which will not be described herein for the sake of brevity.

FIG. 9 is a schematic structural diagram of an apparatus according to an embodiment of the present disclosure. The apparatus illustrated in FIG. 9 includes a processor 610, and the processor 610 may invoke and execute a computer program from a memory to implement the methods in the embodiments of the present disclosure.

In some embodiments, as illustrated in FIG. 9, the apparatus 600 may further include a memory 620. The processor 610 may invoke and execute a computer program from the memory 620 to implement the methods in the embodiments of the present disclosure.

The memory 620 may be a separate device independent of the processor 610 or may be integrated in the processor 610.

In some embodiments, the apparatus 600 may further include an input interface 630. The processor 610 may control the input interface 630 to communicate with other devices or chips, specifically, may acquire information or data transmitted by other devices or chips. Alternatively, the processor 610 is located inside the chip or outside the chip.

In some embodiments, the processor 610 may implement the function of a processing unit in a terminal device, or the processor 610 may implement the function of a processing unit in a network device, which will not be described herein for the sake of brevity.

In some embodiments, the input interface 630 may implement the function of the communication unit in the terminal device, or the input interface 630 may implement the function of the communication unit in the network device.

In some embodiments, the apparatus 600 may further include an output interface 640. The processor 610 may control the output interface 640 to communicate with other devices or chips, specifically, may output information or data to other devices or chips. Alternatively, the processor 610 is located inside the chip or outside of the chip.

In some embodiments, the output interface 640 may implement the function of the communication unit in the terminal device, or the output interface 640 may implement the function of the communication unit in the network device.

In some embodiments, the apparatus may be applied to the network device in the embodiments of the present disclosure, and the apparatus may implement the corresponding processes implemented by the network device in various methods of the embodiments of the present disclosure, which will not be described herein for the sake of brevity.

In some embodiments, the apparatus may be applied to the terminal device in the embodiments of the present disclosure, and the apparatus may implement the corresponding processes implemented by the terminal device in various methods of the embodiments of the present disclosure.

It should be understood that the apparatus mentioned in the embodiment of the present disclosure may be a chip, such as a system level chip, a system chip, a chip system or a system-on-chip or the like.

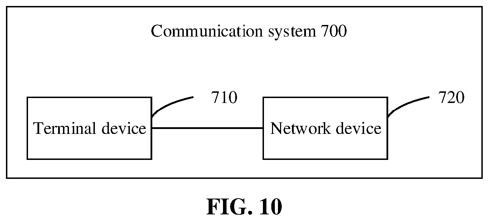

FIG. 10 is a schematic block diagram of a communication system 700 according to an embodiment of the present disclosure. As illustrated in FIG. 10, the communication system 700 includes the terminal device 710 and the network device 720.

The terminal device 710 may be configured to implement the corresponding functions implemented by the terminal device in the above methods, and the network device 720 may be configured to implement the corresponding functions implemented by the network device in the above methods, which will not be described herein for the sake of brevity.

It should be understood that the processor of the embodiments of the present disclosure may be an integrated circuit chip having signal processing capabilities. In the implementation process, the operations of the above method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The operations of the method disclosed in combination with the embodiments of the present disclosure may be directly embodied as execution by the hardware decoding processor, or may be executed by a combination of hardware and software modules in the decoding processor. The software module may be located in a Random Access Memory (RAM), a flash memory, a Read-Only Memory (ROM), a Programmable ROM (PROM), an electrically erasable PROM (EEPROM), a register and other storage medium mature in the art. The storage medium is located in the memory, and the processor reads the information in the memory and completes the operations of the methods in combination with its hardware.

It is understood that the memory in the embodiments of the present disclosure may be a volatile memory or a non-volatile memory, or may include both volatile and non-volatile memory. The non-volatile memory may be a ROM, a PROM, an Erasable PROM (EPROM), an EEPROM, or a flash memory. The volatile memory may be a RAM, which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) and Direct Rambus RAM (DR RAM). It should be noted that the memory of the systems and methods described herein is intended to include, but is not limited to, these and any other suitable type of memory.

It should be understood that the above memory is exemplary, but not limiting, and, for example, the memory in embodiments of the present disclosure may also be an SRAM, a DRAM, an SDRAM, a DDR SDRAM, an ESDRAM, an SLDRAM, a DR RAM, etc. That is, the memory in embodiments of the present disclosure is intended to include but not limited to these and any other suitable types of memory.

Embodiments of the present disclosure further provide a computer readable storage medium for storing a computer program.

In some embodiments, the computer readable storage medium may be applied to the network device in the embodiments of the present disclosure, and the computer program causes the computer to execute the corresponding processes implemented by the network device in various methods of the embodiments of the present disclosure, which will not be described herein for the sake of brevity.

In some embodiments, the computer readable storage medium may be applied to the terminal device in the embodiments of the present disclosure, and the computer program causes the computer to execute the corresponding processes implemented by the terminal device in various methods of the embodiments of the present disclosure, which will not be described herein for the sake of brevity.

Embodiments of the present disclosure further provide a computer program product including computer program instructions.

In some embodiments, the computer program product may be applied to the network device in the embodiments of the present disclosure, and the computer program instructions cause the computer to execute the corresponding processes implemented by the network device in various methods of the embodiments of the present disclosure, which will not be described herein for the sake of brevity.

In some embodiments, the computer program product may be applied to the terminal device in the embodiments of the present disclosure, and the computer program instruction causes the computer to execute the corresponding processes implemented by the terminal device in various methods of the embodiments of the present disclosure, which will not be described herein for the sake of brevity.

Embodiments of the present disclosure further provide a computer program.

In some embodiments, the computer program may be applied to the network device in the embodiments of the present disclosure, and when the computer program is executed on the computer, the computer executes the corresponding processes implemented by the network device in various methods of the embodiments of the present disclosure, which will not be described herein for the sake of brevity.

Alternatively, the computer program may be applied to the terminal device in the embodiments of the present disclosure, and when the computer program is executed on the computer, the computer executes the corresponding processes implemented by the terminal device in various methods of the embodiments of the present disclosure, which will not be described herein for the sake of brevity.

Those of ordinary skill in the art will appreciate that the various exemplary units and algorithm steps described in combination with the embodiments disclosed herein may be implemented in electronic hardware or a combination of computer software and electronic hardware. Whether these functions are performed in hardware or software depends on the specific application and design constraints of the technical solutions. Professionals may use different methods for each particular application to implement the described functionality, but such implementation should not be considered outside the scope of the present disclosure.

Those skilled in the art will clearly appreciate that, for convenience and conciseness of description, the specific operating processes of the above described systems, apparatuses and units may refer to the corresponding processes in the aforementioned method embodiments, which will not be described herein for the sake of brevity.

In several embodiments provided herein, it should be understood that the disclosed systems, apparatuses and methods may be implemented in other ways. For example, the above embodiments of the apparatuses are only schematic, for example, the division of the units is only a logical function division, and in practice, there may be another division mode, for example, multiple units or components may be combined or integrated into another system, or some features may be ignored or not performed. On the other hand, the coupling, direct coupling or communication connection between each other shown or discussed may be indirect coupling or communication connection through some interfaces, apparatus or units, and may be electrical, mechanical or other form.

The units illustrated as separate components may or may not be physically separated, and the components displayed as units may or may not be physical units, i.e., may be located in one place, or may be distributed over multiple network units. Part or all of the units may be selected according to the actual needs to achieve the purpose of the embodiments.

In addition, various functional units in various embodiments of the present disclosure may be integrated in one processing unit, each unit may exist physically alone, or two or more units may be integrated in one unit.

When implemented in the form of software functional units, and sold or used as stand-alone products, the functions may be stored in a computer readable storage medium. With this understanding, the technical solution of the present disclosure in essence or in part contributing to the prior art may be embodied in the form of a software product. The computer software product is stored in a storage medium, and includes instructions for causing a computer device (which may be a personal computer, a server, a network device, etc.) to perform all or part of the steps of the methods described in various embodiments of the present disclosure. The above storage medium includes a U disk, a removable hard disk, a ROM, a RAM, a magnetic disk or an optical disk and other medium capable of storing program codes.

The above is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

## Claims

1. A wireless communication method, comprising:
receiving, by a terminal device, at least one piece of information,
wherein the at least one piece of information is used to indicate at least one of: whether a network device supports a wake up signal (WUS) Zone (WZ), or, activation or deactivation of a WUS based power saving (WBPS) mode.

2. The method of claim 1, wherein,
the at least one piece of information comprises first information, wherein the first information is used to indicate the activation of the WBPS mode, and the network device supports the WZ by default.

3. The method of claim 2, wherein,
the first information is carried by a system broadcast.

4. The method of claim 2 or 3, wherein,
the first information is carried by a broadcasted synchronization signal in a Master Information Block (MIB) or a System Information Block 1 (SIB1).

5. The method of any one of claims 2 to 4, wherein,
the first information is received by the terminal device during an initial synchronization process.

6. The method of claim 2, wherein,
the first information is carried by one of: a Radio Resource Control (RRC) signaling, a Media Access Control Control Element (MAC CE), and Downlink Control Information (DCI).

7. The method of claim 1, wherein,
the at least one piece of information comprises second information and third information, wherein the second information is used to indicate that the network device supports the WZ, and the third information is used to indicate the activation or deactivation of the WBPS mode.

8. The method of claim 7, wherein,
both the second information and the third information are carried by a system broadcast.

9. The method of claim 7 or 8, wherein,
both the second information and the third information are carried by a broadcasted synchronization signal in a MIB or a SIB1.

10. The method of any one of claims 7 to 9, wherein,
both the second information and the third information are received by the terminal device during an initial synchronization process.

11. The method of claim 7, wherein,
the second information is carried by a system broadcast; and/or
the third information is carried by one of: a RRC signaling, a MAC CE and DCI.

12. The method of claim 11, wherein,
the second information is carried by a broadcasted synchronization signal in a MIB or a SIB1.

13. The method of claim 11 or 12, wherein,
the second information is received by the terminal device during an initial synchronization process.

14. The method of any one of claims 7 to 13, wherein,
before receiving the at least one piece of information, the method further comprises:
transmitting, by the terminal device, first request information, wherein the first request information is used to request the activation of the WBPS mode.

15. The method of any one of claims 1 to 14, further comprising:
transmitting, by the terminal device, fourth information, wherein the fourth information is used to indicate that the terminal device is in the WBPS mode.

16. The method of claim 15, wherein,
the fourth information is carried by a measurement report.

17. The method of any one of claims 1 to 16, wherein,
in a case that the at least one piece of information indicates the activation of the WBPS mode, within the WZ, synchronization between a wake up receiver (WUR) of the terminal device and the network device is implemented based on a main radio of the terminal device.

18. The method of claim 17, wherein,
the synchronization between the WUR and the network device is implemented through a calibration performed by the main radio for the WUR.

19. The method of claim 18, wherein,
the calibration performed by the main radio for the WUR comprises:
a calibration performed by the main radio after the main radio is awakened periodically by the WUR, or a calibration performed by the main radio for the WUR after the main radio is awakened by the WUR and is synchronized with the network device, after the main radio losing synchronization.

20. The method of any one of claims 1 to 16, wherein,
in a case that the at least one piece of information indicates the activation of the WBPS mode, within the WZ, a synchronization between a WUR of the terminal device and the network device is implemented based on a synchronization signal of the WUR.

21. The method of claim 20, wherein,
a time-frequency resource corresponding to the synchronization signal of the WUR is located at a fixed position of a frequency band.

22. The method of claim 21, wherein,
the time-frequency resource corresponding to the synchronization signal of the WUR is located at center of entire frequency band.

23. The method of claim 21 or 22, wherein,
a time-frequency resource corresponding to the synchronization signal of the WUR is stipulated by a protocol, or the time-frequency resource corresponding to the synchronization signal of the WUR is semi-statically configured by the network device, or the time-frequency resource corresponding to the synchronization signal of the WUR is dynamically configured by the network device.

24. The method of claim 20, wherein the time-frequency resource corresponding to the synchronization signal of the WUR is determined based on a time-frequency resource corresponding to a synchronization signal of a main radio of the terminal device.

25. The method of claim 24, wherein a fixed offset exists between the time-frequency resource corresponding to the synchronization signal of the WUR and the time-frequency resource corresponding to the synchronization signal of the main radio.

26. The method of claim 25, wherein a first offset exists between a time domain resource corresponding to the synchronization signal of the WUR and a time domain resource corresponding to the synchronization signal of the main radio, and/or, a second offset exists between a frequency domain resource corresponding to the synchronization signal of the WUR and a frequency domain resource corresponding to the synchronization signal of the main radio.

27. The method of any one of claims 24 to 26, wherein,
the synchronization signal of the WUR and the synchronization signal of the main radio are Quasi-co-located (QCL).

28. The method of claim 27, wherein,
a QCL type corresponding to the synchronization signal of the WUR and the synchronization signal of the main radio is a QCL type D.

29. The method of claim 27 or 28, wherein a spatial filter corresponding to the synchronization signal of the WUR has same mode as a spatial filter corresponding to the synchronization signal of the main radio.

30. The method of any one of claims 24 to 29, wherein a period of the synchronization signal of the WUR is n times a period of the synchronization signal of the main radio, wherein n is a positive integer and n ≥ 1.

31. The method of claim 30, wherein a value of n is obtained from system information.

32. The method of any one of claims 1 to 31, wherein,
in a case that the at least one piece of information indicates the activation of the WBPS mode and a main radio of the terminal device is in an awake state, measurement(s) for a serving cell and/or neighbor cell(s) is performed by the main radio within the WZ.

33. The method of claim 32, wherein,
whether the terminal device is within the WZ is determined by a distance between the terminal device and the network device.

34. The method of claim 33, wherein,
in a case that a distance between the terminal device and the network device is less than or equal to a first threshold, the terminal device is within the WZ, and/or, in a case that the distance between the terminal device and the network device is greater than the first threshold, the terminal device is outside the WZ.

35. The method of claim 32, wherein,
whether the terminal device is within the WZ is determined based on a sensitivity of the WUR of the terminal device and a Reference Signal Received Power (RSRP) obtained by the main radio measuring the Synchronization Signal Block (SSB).

36. The method of any one of claims 1 to 31, wherein,
in a case that the at least one piece of information indicates the activation of the WBPS mode and a main radio of the terminal device is in a dormant state, a measurement within the WZ for a serving cell is performed by a WUR of the terminal device, and/or, measurement(s) within a first zone for the serving cell and/or neighboring cell(s) is performed by the main radio; and/or, a measurement within a second zone for the serving cell is performed by the WUR of the terminal device, and/or, the measurement within the second zone for the serving cell is performed by the main radio,
wherein the main radio is awakened by the WUR, the first zone and the second zone are both outside the WZ, and the second zone is between the first zone and the WZ.

37. The method of claim 36, wherein,
within the second zone, the main radio being awakened by the WUR comprises:
the main radio being periodically awakened by the WUR, or the main radio being awakened by the WUR on demand.

38. The method of claim 36 or 37, wherein,
a zone where the terminal device is located is determined by a distance between the terminal device and the network device.

39. The method of claim 38, wherein,
in a case that a distance between the terminal device and the network device is less than a second threshold, the terminal device is within the WZ, and/or, in a case that the distance between the terminal device and the network device is greater than or equal to the second threshold and less than or equal to a third threshold, the terminal device is within the second zone, and/or, in a case that the distance between the terminal device and the network device is greater than the third threshold, the terminal device is within the first zone.

40. The method of claim 36 or 37, wherein,
a zone where the terminal device is located is determined based on a signal strength obtained by the WUR of the terminal device measuring a synchronization signal.

41. The method of claim 40, wherein,
in a case that the signal strength measured by the WUR of the terminal device is greater than a fourth threshold, the terminal device is within the WZ, and/or, in a case that the signal strength measured by the WUR of the terminal device is less than or equal to the fourth threshold and greater than or equal to a fifth threshold, the terminal device is within the second zone, and/or, in a case that the signal strength measured by the WUR of the terminal device is less than the fifth threshold, the terminal device is within the first zone.

42. A wireless communication method, comprising:
transmitting, by a network device, at least one piece of information,
wherein the at least one piece of information is used to indicate at least one of: whether the network device supports a wake up signal (WUS) Zone (WZ), or activation or deactivation of a WUS based power saving (WBPS) mode.

43. The method of claim 42, wherein,
the at least one piece of information comprises first information, wherein the first information is used to indicate the activation of the WBPS mode, and the network device supports the WZ by default.

44. The method of claim 43, wherein,
the first information is carried by a system broadcast.

45. The method of claim 43 or 44, wherein,
the first information is carried by a broadcasted synchronization signal in a Master Information Block (MIB) or a System Information Block 1 (SIB1).

46. The method of any one of claims 43 to 45, wherein,
the first information is transmitted by the network device during an initial synchronization process.

47. The method of claim 43, wherein,
the first information is carried by one of: a Radio Resource Control (RRC) signaling, a Media Access Control Control Element (MAC CE), and Downlink Control Information (DCI).

48. The method of claim 42, wherein
the at least one piece of information comprises second information and third information, wherein the second information is used to indicate that the network device supports the WZ, and the third information is used to indicate the activation or deactivation of the WBPS mode.

49. The method of claim 48, wherein,
both the second information and the third information are carried by a system broadcast.

50. The method of claim 48 or 49, wherein,
both the second information and the third information are carried by a broadcast synchronization signal in a MIB or a SIB1.

51. The method of any one of claims 48 to 50, wherein,
both the second information and the third information are transmitted by the network device during an initial synchronization process.

52. The method of claim 48, wherein
the second information is carried by a system broadcast; and/or the third information is carried by one of: a RRC signaling, a MAC CE and DCI.

53. The method of claim 52, wherein
the second information is carried by a broadcasted synchronization signal in a MIB or a SIB1.

54. The method of claim 52 or 53, wherein,
the second information is transmitted by the network device during an initial synchronization process.

55. The method of any one of claims 48 to 54, wherein,
before transmitting the at least one piece of information, the method further comprises:
receiving, by the network device, first request information, wherein the first request information is used to request the activation of the WBPS mode.

56. The method of any one of claims 42 to 55, further comprising:
receiving, by the network device, fourth information, wherein the fourth information is used to indicate that the terminal device is in the WBPS mode.

57. The method of claim 56, wherein
the fourth information is carried by a measurement report.

58. The method of any one of claims 42 to 57, wherein,
in a case that the at least one piece of information indicates the activation of the WBPS mode, within the WZ, synchronization between a wake up receiver (WUR) of the terminal device and the network device is implemented based on a main radio of the terminal device.

59. The method of claim 58, wherein
the synchronization between the WUR and the network device is implemented through a calibration performed by the main radio for the WUR.

60. The method of claim 59, wherein,
the calibration performed by the main radio for the WUR comprises:
a calibration performed by the main radio after the main radio is awakened periodically by the WUR, or a calibration performed by the main radio for the WUR after the main radio is awakened by the WUR and is synchronized with the network device, after the main radio losing synchronization.

61. The method of any one of claims 42 to 57, wherein,
in a case that the at least one piece of information indicates the activation of the WBPS mode, within the WZ, a synchronization between a WUR of the terminal device and the network device is implemented based on a synchronization signal of the WUR.

62. The method of claim 61, wherein
a time-frequency resource corresponding to the synchronization signal of the WUR is located at a fixed position of a frequency band.

63. The method of claim 62, wherein
the time-frequency resource corresponding to the synchronization signal of the WUR is located at center of entire frequency band.

64. The method of claim 62 or 63, wherein,
a time-frequency resource corresponding to the synchronization signal of the WUR is stipulated by a protocol, or the time-frequency resource corresponding to the synchronization signal of the WUR is semi-statically configured by the network device, or the time-frequency resource corresponding to the synchronization signal of the WUR is dynamically configured by the network device.

65. The method of claim 61, wherein the time-frequency resource corresponding to the synchronization signal of the WUR is determined based on a time-frequency resource corresponding to a synchronization signal of a main radio of the terminal device.

66. The method of claim 65, wherein a fixed offset exists between the time-frequency resource corresponding to the synchronization signal of the WUR and the time-frequency resource corresponding to the synchronization signal of the main radio.

67. The method of claim 66, wherein a first fixed offset exists between a time domain resource corresponding to the synchronization signal of the WUR and a time domain resource corresponding to the synchronization signal of the main radio, and/or a second fixed offset exists between a frequency domain resource corresponding to the synchronization signal of the WUR and a frequency domain resource corresponding to the synchronization signal of the main radio.

68. The method of any one of claims 65 to 67, wherein,
the synchronization signal of the WUR and the synchronization signal of the main radio are Quasi-co-located (QCL).

69. The method of claim 68, wherein
a QCL type corresponding to the synchronization signal of the WUR and the synchronization signal of the main radio is a QCL type D.

70. The method of claim 68 or 69, wherein a spatial filter corresponding to the synchronization signal of the WUR has same mode as a spatial filter corresponding to the synchronization signal of the main radio.

71. The method of any one of claims 65 to 70, wherein a period of the synchronization signal of the WUR is n times a period of the synchronization signal of the main radio, wherein n is a positive integer and n ≥ 1.

72. The method of claim 71, wherein a value of n is obtained from system information.

73. The method of any one of claims 42 to 72, wherein,
in a case that the at least one piece of information indicates the activation of the WBPS mode and a main radio of the terminal device is in an awake state, measurement(s) for a serving cell and/or neighbor cell(s) is performed by the main radio within the WZ.

74. The method of claim 73, wherein
whether the terminal device is within the WZ is determined by a distance between the terminal device and the network device.

75. The method of claim 74, wherein
in a case that a distance between the terminal device and the network device is less than or equal to a first threshold, the terminal device is within the WZ, and/or, in a case that the distance between the terminal device and the network device is greater than the first threshold, the terminal device is outside the WZ.

76. The method of claim 73, wherein
whether the terminal device is within the WZ is determined based on a sensitivity of the WUR of the terminal device and a Reference Signal Received Power (RSRP) obtained by the main radio measuring the Synchronization Signal Block (SSB).

77. The method of any one of claims 42 to 72, wherein,
in a case that the at least one piece of information indicates the activation of the WBPS mode and a main radio of the terminal device is in a dormant state, a measurement within the WZ for a serving cell is performed by a WUR of the terminal device, and/or, measurement(s) within a first zone for the serving cell and/or neighboring cell(s) is performed by the main radio; and/or, a measurement within a second zone for the serving cell is performed by the WUR of the terminal device, and/or, the measurement within the second zone for the serving cell is performed by the main radio,
wherein the main radio is awakened by the WUR, the first zone and the second zone are both outside the WZ, and the second zone is between the first zone and the WZ.

78. The method of claim 77, wherein
within the second zone, the main radio being awakened by the WUR comprises:
the main radio being periodically awakened by the WUR, or the main radio being awakened by the WUR on demand.

79. The method of claim 77 or 78, wherein,
a zone where the terminal device is located is determined by a distance between the terminal device and the network device.

80. The method of claim 79, wherein,
in a case that a distance between the terminal device and the network device is less than a second threshold, the terminal device is within the WZ, and/or, in a case that the distance between the terminal device and the network device is greater than or equal to the second threshold and less than or equal to a third threshold, the terminal device is within the second zone, and/or, in a case that the distance between the terminal device and the network device is greater than the third threshold, the terminal device is within the first zone.

81. The method of claim 77 or 78, wherein,
a zone where the terminal device is located is determined based on a signal strength obtained by the WUR of the terminal device measuring a synchronization signal.

82. The method of claim 81, wherein,
in a case that the signal strength measured by the WUR of the terminal device is greater than a fourth threshold, the terminal device is within the WZ, and/or, in a case that the signal strength measured by the WUR of the terminal device is less than or equal to the fourth threshold and greater than or equal to a fifth threshold, the terminal device is within the second zone, and/or, in a case that the signal strength measured by the WUR of the terminal device is less than the fifth threshold, the terminal device is within the first zone.

83. A terminal device, comprising:
a first communication unit, configured to receive at least one piece of information,
wherein the at least one piece of information is used to indicate at least one of: whether a network device supports a wake up signal (WUS) Zone (WZ), or activation or deactivation of a WUS based power saving (WBPS) mode.

84. A network device, comprising:
a first communication unit, configured to transmit at least one piece of information,
wherein the at least one piece of information is used to indicate at least one of: whether the network device supports a wake up signal (WUS) Zone (WZ), or activation or deactivation of a WUS based power saving (WBPS) mode.

85. A terminal device comprising a processor and a memory, wherein the memory is configured to store a computer program, and the processor is configured to invoke and execute the computer program stored in the memory to cause the terminal device to perform the method of any one of claims 1 to 41.

86. A network device comprising a processor and a memory, wherein the memory is configured to store a computer program, and the processor is configured to invoke and execute the computer program stored in the memory to cause the network device to perform the method of any one of claims 42 to 82.

87. A chip, comprising a processor configured to invoke and execute a computer program from a memory to cause a device on which the chip is mounted to perform the method of any one of claims 1 to 41.

88. A chip, comprising a processor configured to invoke and execute a computer program from a memory to cause a device on which the chip is mounted to perform the method of any one of claims 42 to 82.

89. A computer readable storage medium, for storing a computer program that, when executed, implementing the method of any one of claims 1 to 41.

90. A computer readable storage medium, for storing a computer program that, when executed, implementing the method of any one of claims 42 to 82.

91. A computer program product, comprising computer program instructions that, when executed, implementing the method of any one of claims 1 to 41.

92. A computer program product, comprising computer program instructions that, when executed, implementing the method of any one of claims 42 to 82.

93. A computer program, which, when executed, implementing the method of any one of claims 1 to 41.

94. A computer program, which, when executed, implementing the method of any one of claims 42 to 82.
